# EUROPEAN PATENT SPECIFICATION

(11) **EP 4 399 430 B1**
(45) Date of publication and mention of the grant of the patent: **11.06.2025**
(21) Application number: 22777198.7
(22) Date of filing: 07.09.2022
(51) Int. Cl.: F16L 37/56, H01R 13/629, H01R 13/52, F16L 25/01, F16L 37/18

(54) **MODULAR MULTI-CONNECTION DEVICE FOR HYDRAULIC AND ELECTRICAL LINES**
MODULARE MEHRFACHVERBINDUNGSVORRICHTUNG FÜR HYDRAULISCHE UND ELEKTRISCHE LEITUNGEN
DISPOSITIF MODULAIRE À RACCORDEMENT MULTIPLE POUR CONDUITES HYDRAULIQUES ET ÉLECTRIQUES

(30) Priority: 10.09.2021 IT 202100023420
(43) Date of publication of application: 17.07.2024
(73) Proprietor: FASTER S.r.l., 26027 Rivolta d'Adda (CR) (IT)
(72) Inventor: RUSCONI, Paolo, 26027 Rivolta d'Adda (CR) (IT); ARRIGONI, Riccardo, 26027 Rivolta d'Adda (CR) (IT); DANIELE, Andrea, 42122 Reggio Nell'Emilia (IT)
(74) Representative: Bianchetti & Minoja with Trevisan & Cuonzo IPS SRL
(86) International application number: PCT/IB2022/058406
(87) International publication number: WO 2023/037257

(56) References cited:
- EP-A1- 3 569 911
- EP-B1- 1 950 484
- IT-A1- MI 940 559
- JP-A- 2002 252 055
- US-A1- 2020 049 293
- CEJN: "CEJN Multi-X - Flexible multi connections for quick and easy handling", 31 December 2012 (2012-12-31), pages 1 - 12, XP093233778, Retrieved from the Internet <URL:https://www.cejn.com/globalassets/documents/brochures/multi-x-multi-coupling-plate/multi-x_usa.pdf> [retrieved on 20241212]

## Description

### FIELD OF THE INVENTION

The present invention concerns a modular multi-connection device for the connection of hydraulic and electrical lines, in particular for the connection of the lines of a machine, e.g. an agricultural machine, with a utility.

In particular, the multi-connection device according to the present invention allows both the oleodynamic connections and the electrical connections to be managed at the same time, in particular by being able to connect electrical lines with different power levels.

### BACKGROUND

Multi-connection devices that allow the simultaneous connection of a plurality of hydraulic lines are known from the state of the art. The same Applicant holds numerous patent applications concerning multi-connection systems, such as the international patent application WO2021090201, and, among others, the European patents EP2476941, EP3009726 and EP 2884146.

Currently, the oleodynamic and electrical connections involved in the connection of an operating machine to a utility are managed separately, with separate connection devices.

The electrical connections generally have dedicated connectors (and separate from the others) for the different levels of electrical power of the lines since connectors dedicated to individual power levels, or to limited power ranges are available on the market at low cost.

Even in the case of the multi-connection plate solutions currently known developed by the same FASTER, they envisage the presence of a seat dedicated to an electrical connector (usually multi-pole), in order to connect the low-power utilities present on the tool, such as the rear warning lights and some low-power electrical utilities.

In some cases such multi-connection devices also comprise the electrical connector, which is mounted and wired in the multi-connection plates directly by the end customer, i.e. by the equipment manufacturer.

However, such devices of known type are not free from drawbacks.

In particular, the multi-connection devices of known type do not allow for the connection of a plurality of electrical lines having different power levels.

Furthermore, the multi-connection devices of known type do not have a modular structure, and therefore they are not versatile with respect to the different needs of the user who may need to provide one or more electrical connectors of different type on the multi-connection device.

Furthermore, even when the multi-connection devices of known type provide a seat for housing an electrical connector, they generally do not allow the simultaneous connection of a plurality of electrical lines at the same time and in the same manners as the hydraulic lines are connected.

This is perceived as an inconvenience by the user, who generally has to manually connect the electrical lines even when instead the device allows the simultaneous and automatic connection of a multiplicity of hydraulic lines.

US 2020/049293 A1 discloses a multi-connector device according to the preamble of claim 1.

### SUMMARY OF THE INVENTION

In light of the above, the task of the present invention is to provide a multi-connection device for the simultaneous connection of hydraulic and electrical lines, in particular for the connection of the lines of a machine, for example an agricultural machine, with a utility, which allows the simultaneous connection of a plurality of hydraulic and electrical lines.

Within this task, aim of the present invention is to provide a multi-connection device that allows to connect electrical lines with different power levels.

Last but not least, aim of the present invention is to provide a modular multi-connection device, which allows a high degree of customization to the end user who can easily decide and vary the number and the type of electrical connectors to be installed on the device itself.

The task set out above, as well as the aforementioned aims and others that will become clearer later, are achieved by a multi-connection device for the simultaneous connection of hydraulic and electrical lines, according to the appended claim 1.

Other features of the multi-connection device according to the present invention are indicated in the dependent claims, which also form an integral part of the present disclosure.

### LIST OF FIGURES

Further features and advantages will become clearer from the description of preferred, but not exclusive, embodiments, of a modular multi-connection device for the simultaneous connection of a plurality of hydraulic and electrical lines according to the present invention, illustrated by way of non-limiting example with the aid of the accompanying drawings in which:
figure 1 shows an overall view of the multi-connection device according to the present invention in accordance with a first embodiment, in which the fixed plate and the movable plate are decoupled;
figure 2 shows the multi-connection device of figure 1 in an intermediate connection phase in which the plates, fixed and movable, are facing each other and about to be connected;
figure 3 shows the multi-connection device of figure 2 with completed connection, and the cam lever rotated in the connection closing position;
figures 4A and 4B show perspective views of the male connector and the female connector for the connection of the electrical lines, respectively;
figure 5 shows a plan view of the male connector from above;
figure 6 shows a plan view of the female connector from above;

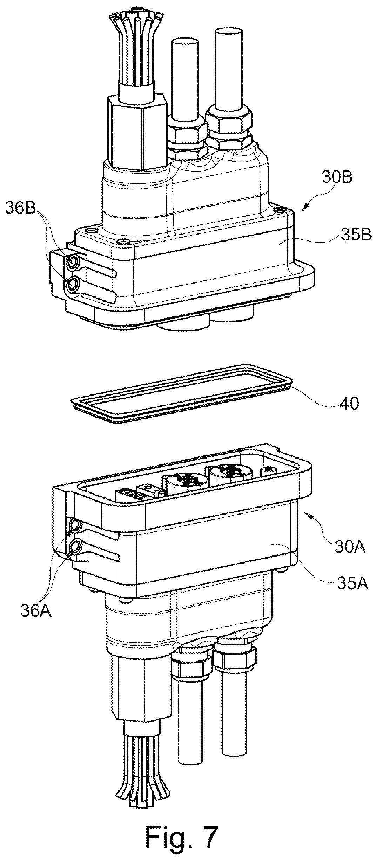

figure 7 shows a partially exploded perspective view of the male and female connectors spaced apart from each other and of the lip seal adapted to be fitted on the support of the male connector;

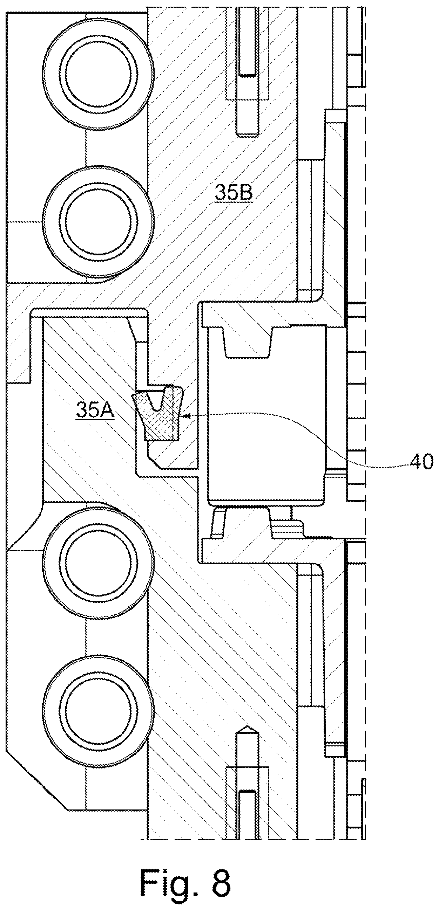

figure 8 shows a cross-sectional view where the male and female connectors have been connected, in which the positioning of the lip seal can be seen.

### DETAILED DESCRIPTION OF THE INVENTION

With particular reference to the appended figures, the modular multi-connection device **10** for the simultaneous connection of a plurality of hydraulic lines **20** for pressurized fluids and electrical lines **30** according to the present invention comprises a first fixed plate **10a,** intended to be coupled to an operating machine, and a second movable plate **10b** adapted to be associated with a utility.

A multiplicity of female cartridges **20a** are inserted into said first fixed plate **10a,** and a multiplicity of male couplings **20b** are inserted into said second movable plate **10b.**

Said fixed plate **10a** is associated with a lever assembly **11** comprising a lever **11c** and a pair of plate-like elements **12** each comprising a cam seat **11a**, **11b** adapted to accommodate a corresponding pin **11d, 11e** integral with said second movable plate **10b** in order to allow the coupling of the two plates and the connection of the male couplings **20B** within the corresponding couplings, or more precisely female cartridge couplings **20A.**

Integral with said first fixed plate **10a** there is provided a first female connector assembly **30A** which houses one or more female electrical connectors **31a, 32a, 33a, 34a** and integral to said second movable plate **10b** there is provided a second male connector assembly **30B** which houses one or more corresponding male electrical connectors **31b, 32b, 33b, 34b.**

Said first female connector assembly **30A** comprises in turn a first support element **35A** which performs the dual clamping function to allow the connection of the first female connector assembly **30A** to said first fixed plate **10a** of the multi-connection device **10** to which the connector assembly **30A** is to be connected, and of sealing element towards the external environment.

Similarly, said second male connector assembly **30B** will comprise a second support element **35B** which performs the dual clamping function to allow the connection of the second male connector assembly **30B** to said second movable plate **10B** of the multi-connection device **10** to which the connector assembly **30B** is to be connected, and of sealing element towards the external environment.

In particular, the sealing action between said first **35A** and second **35B** support element is ensured by the presence of a sealing element **40** adapted to seal against external environmental agents (water, dust, dirt in general) between said first female connector assembly **30A** and said second male connector assembly **30B.**

Preferably, said sealing element **40** is mounted on said second male support element **35B** and is configured to exert the seal against said first female support element **35A.** Preferably, said sealing element **40** is a gasket. Even more preferably said sealing element **40** is a lip seal.

The sealing element is designed to seal the connector assembly **30A, 30B** given by the connection of said first **35A** and second **35B** support elements from the surrounding environment when it is connected and the lines are in operation.

In addition, the sealing element **40** and the sealing surfaces are advantageously made so as to guarantee the seal even during the mechanical deformation of the plates **10A, 10B** (and therefore also of the connector) due to the application of hydraulic pressure.

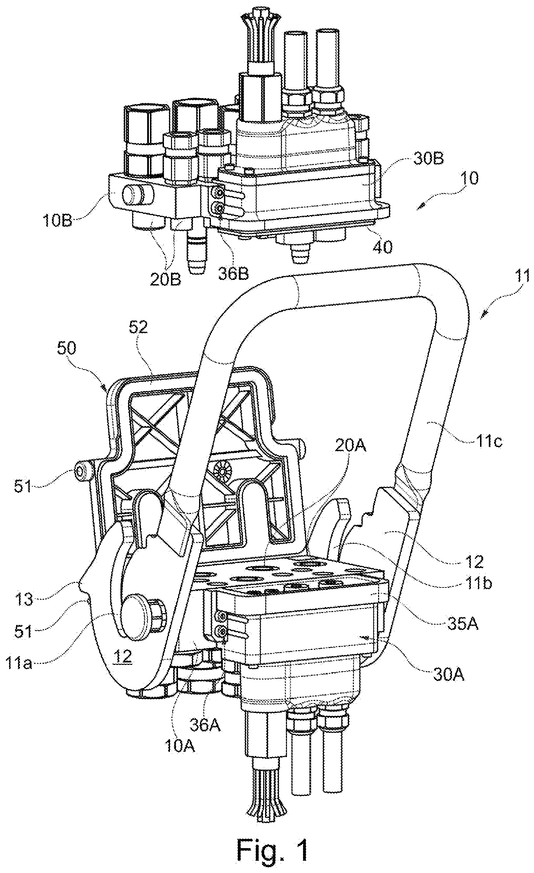

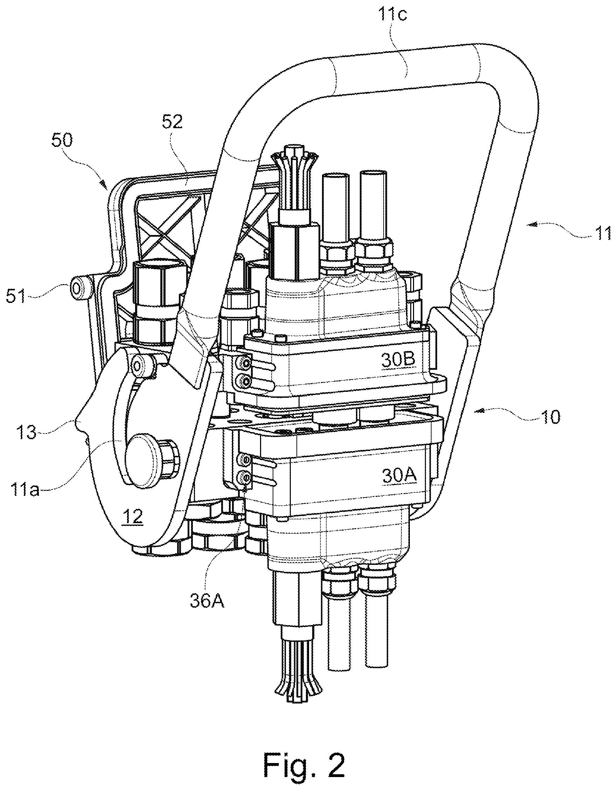

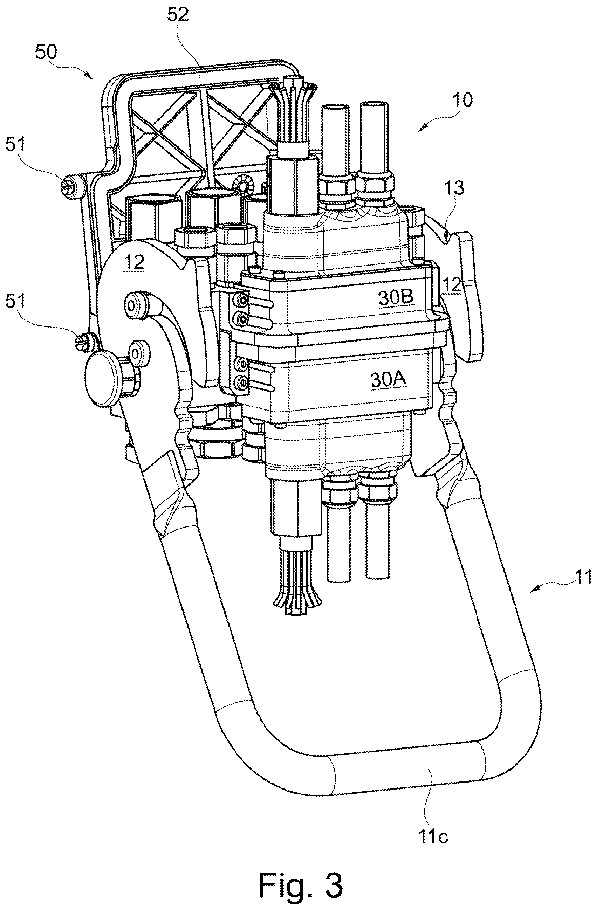

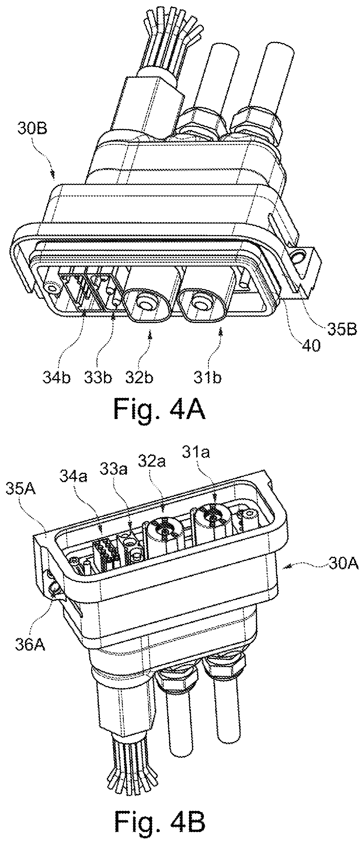

The support element **35A** has coupling surfaces and fastening means **36A** suitable for allowing the integral assembly with the relative fixed plate **10A** in the case of a female connector assembly **30A.** Said fastening means **36A** advantageously comprise holes obtained on the flange of said support element **35A,** visible for example in figure 4B, in which fastening screws, visible for example in figures 1, 2 and 3, can be inserted.

Similarly, the support element **35B** has coupling surfaces and fastening means **36B** suitable for allowing the integral assembly with the relative movable plate **10B** in the case of a female connector assembly **30B.** Said fastening means **36B** advantageously comprise holes obtained on the flange of said support element **35B** in which fastening screws, visible for example in figures 1, 2 and 3, can be inserted.

Each of said female **30A** and male **30B** connector assemblies further comprises a first frame **37A** and, respectively, a second frame **37B,** advantageously comprising each one or more fastening elements suitable for allowing the assembly of modules **31, 32, 33, 34** each supporting an electrical connector respectively female **31a, 32a, 33a, 34a** or male **31b, 32b, 33b, 34b.**

Advantageously, said fastening elements are standardized so as to allow inserting into said frame **37A, 37B** different types of modules **31, 32, 33, 34** for as many types of electrical connectors.

The frame **37A, 37B** is fastened inside the connector assembly (female **30A** and male **30B)** and acts as an anchor for the modules **31, 32, 33, 34.**

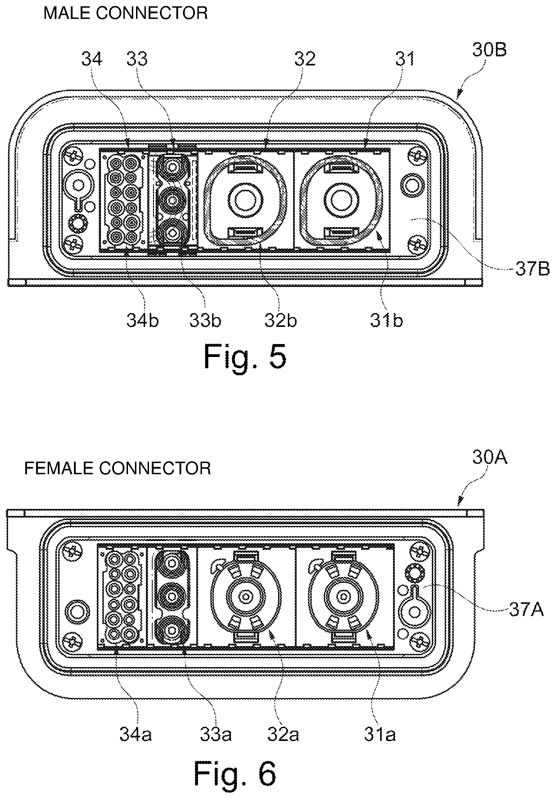

By way of example only, figures 5 and 6 show, inserted in the respective frames **37A** and **37B,** a pair of high-power female **31a, 31b** and male **32a, 32b** connectors, a medium-power female **33a** and male **33b** connector, and a low-power female **34a** and male **34b** connector.

As can be seen, the electrical connectors are coupled to the frame by means of modules **31, 32, 33, 34** connected to the frame interchangeably, advantageously also on specific design of the connector manufacturer, in order to allow the assembly of different types of modules and, therefore, of electrical connectors to the frames of the female **30A** and male **30B** connector assemblies.

The multi-connection device **10** according to the present invention is therefore modular in that it provides on said female **30A** and male **30B** connector assemblies for frames **37A, 37B** adapted to accommodate electrical connection modules **31, 32, 33, 34** all having the same fastening system to the frame. The modules **31, 32, 33, 34** can therefore support the same type of electrical connector, like in the case of the example shown in the accompanying figures which comprises two high-power electrical connectors **31a, 31b, 32a, 32b,** or of a different type, like in the case of the other electrical connectors **33a, 33b, 34a, 34b** shown in the example, being able to replace the modules supporting the connectors with extreme ease.

In order to ensure the modularity of the system, the frames **37A, 37B** of the modular connector assemblies **30A, 30B** according to the present invention are advantageously made in different formats, and can contain a variable number of modules **31, 32, 33, 34,** depending on the dimension chosen for the frame.

Furthermore, as described, the modules within the frame are interchangeable, so that any configuration of the modules within the frame can be chosen, ensuring a high versatility of the system.

As a purely by way of non-limiting example, the figures illustrate the most complete modular connector possible, that is, having the maximum dimension of the frame with respect to the dimensions of the male **35B** and female **35A** support elements, so as to be able to contain the maximum variety of modules.

Furthermore, the following modules are illustrated in the exemplary figures that accompany and form an integral part of the present disclosure, in view of the typical applications to which the multi-connection device 10 according to the present invention can be dedicated:
- high-power connector modules (typically 1,000 V, 325 A maximum) **31a, 31b, 32a, 32b** with 2 poles: typically used for electrical connection between batteries and inverters for electric traction, or high-power electrical utilities;
- medium-power connector modules (typically 400 V, 38 A maximum) **33a, 33b** with 3 poles: typically used for medium-power utilities (three-phase motors, other);
- low-power connector modules (typically 250 V, 20 A maximum) **34a, 34b** with 12 poles: typically used for low-power utilities (headlights, servo controls).

By way of example, it should be noted that in the figures illustrating one of the possible embodiments of the connector module according to the present invention only some, in particular three, of the multiple possible electrical lines that can be provided on board the multi-connection device according to the invention are shown. In fact, again by way of example, a signal connection module (e.g. 8-pole, 50 V, 10 A max.), typically used for signal connections (CAN BUS, Ethernet, serial), can be provided.

It has thus been shown that the modular multi-connection device **10** for the simultaneous connection of a multiplicity of hydraulic and electrical lines according to the present invention makes it possible to fulfil the task and achieve the purposes that the invention had set itself.

In particular, it has been illustrated how the hydraulic/electrical multi-connection device **10** according to the invention comprises a hydraulic multi-connection assembly, consisting of a fixed plate **10A,** on which the female hydraulic cartridges **20A** are installed, and a movable plate **10B,** on which all the male hydraulic cartridges **20B** are installed. The hydraulic oil passage tubes, coming from the machine (for cartridges **20A** on the fixed plate **10A)** and from the tool (for cartridges **20B** on the movable plate **10B)** will be connected to each of these cartridges.

A corresponding connector assembly respectively female **30A** and male **30B** are associated with each plate **10A, 10B.** These connector assemblies, of modular type as they allow different types of modules to be installed within the same support frame **37A, 37B,** are each integral with the respective plate **10A, 10B,** so that the connection action will take place in the same way as the hydraulic plates, that is, through the actuation of the lever assembly **11.**

The connector assembly is therefore composable with different types of electrical connections (high, medium, low power), all interchangeable with each other at the discretion of the customer and of the electrical application to be served.

To facilitate the interface between the connector and the plates, mechanical machinings of flattening and threaded drilling are provided to minimise the chain of tolerances that could affect the correct coupling of the connector.

Preferably, in order to ensure the environmental seal of the fixed plate **10A** with the relative female connector assembly **30A** under conditions not connected with the movable plate **10B** and with the relative male connector assembly **30B,** an automatic cover or cap **50** with forced closure as a result of the actuation of the lever assembly **11** is advantageously provided.

As can be seen in the accompanying figures, the cover **50** comprises guide rollers **51** adapted to interact with the plate-like portions **12** of the lever assembly **11,** on the external profile of said plate-like portions **12** there being provided a shaped profile **13** adapted to abut said guide rollers **51** thereby moving the cover **50** into opening/closing when said lever assembly **11** is moved.

Advantageously, said cover **50** comprises, along the perimeter of its lower face, a gasket **52,** preferably a compression gasket, which lever **11** closed is loaded making the seal against the surface of the fixed plate **10A** and of the edge of the first support element **35A** of the relative connector assembly **30A.**

With plates **10A, 10B** and connector assemblies **30A, 30B** connected, on the other hand, the seal with respect to the outside of the connector assemblies is ensured by the lip seal **40.**

The present invention has been described, by way of non-limiting example, according to preferred embodiments, but it is to be understood that changes and/or modifications may be made by the person skilled in the art, without departing from the relative scope of protection, as defined in the appended claims.

## Claims

1. Modular multi-connection device (10) for the simultaneous connection of a plurality of hydraulic (20) and electrical (30) lines comprising a first fixed plate (10A) and a second movable plate (10B) each supporting a plurality of quick couplings respectively female (20A) and male (20B), and a lever assembly (11) for coupling said plates (10A, 10B) and the simultaneous connection of said lines (20, 30),
further comprising integrally connected to said first fixed plate (10A), a first female connector assembly (30A) which houses one or more female electrical connectors (31a, 32a, 33a, 34a), said first female connector assembly (30A) in turn comprising a first support element (35A) adapted to allow the connection of said first female connector assembly (30A) to said first fixed plate (10A), and
further comprising integrally connected to said second movable plate (10B), a second male connector assembly (30B) which houses one or more corresponding male electrical connectors (31b, 32b, 33b, 34b), said second male connector assembly (30B) comprising a second support element (35B) adapted to allow the connection of said second male connector assembly (30B) to said movable plate (10B),
**characterised in that**
said first support element (35A) houses a first frame (37A) comprising in turn one or more fastening elements suitable for allowing the assembly of modules (31, 32, 33, 34) each supporting a female electrical connector (31a, 32a, 33a, 34a) of said one or more female electrical connectors (31a, 32a, 33a, 34a), and
said second support element (35B) houses a second frame (37B) comprising in turn one or more fastening elements suitable for allowing the assembly of modules (31, 32, 33, 34) each supporting a male electrical connector (31b, 32b, 33b, 34b) of said one or more male electrical connectors (31b, 32b, 33b, 34b).

2. Modular multi-connection device (10) according to the preceding claim, **characterized in that** said modules (31, 32, 33, 34) each supporting an electrical connector are interchangeable so that the user can associate with said frames (37A, 37B) of said first and second connector assemblies (30A, 30B) different types of electrical connectors.

3. Modular multi-connection device (10) according to one or more of the preceding claims, **characterized in that** said electrical connectors supported by said frames (37A, 37B) of said first and second connector assembly (30A, 30B) comprise two high-power electrical connectors (31a, 31b, 32a, 32b) with two poles, a medium-power connector (33a, 33b) with three poles, and a low-power connector (34a, 34b) with twelve poles.

4. Modular multi-connection device (10) according to one or more of the preceding claims, **characterized in that** it further comprises, interposed between said first (35A) and second (35B) support element, at least one sealing element (40) adapted to make the seal against air, water and dust with connected device (10).

5. Modular multi-connection device (10) according to the preceding claim, **characterized in that** said sealing element comprises a lip seal and is associated with said second male support element (35B).

6. Modular multi-connection device (10) according to one or more of the preceding claims, **characterized in that** it further comprises, associated with said fixed plate (10A), a lever assembly (11) comprising a lever (11c) and a pair of plate-like elements (12) each comprising a cam seat (11a, 11b) adapted to accommodate a corresponding pin (11d, 11e) integral with said second movable plate (10B) in order to allow the mutual coupling of the two plates and the connection of the male couplings (20B) within the corresponding female cartridge couplings (20A).

7. Modular multi-connection device (10) according to the preceding claim, **characterized in that** the coupling of the plates (10A, 10B) by means of the movement of said lever (11c) causes the simultaneous connection of the male couplings (20B) within the corresponding female cartridge couplings (20A) and the connection of the electrical lines (30) by coupling the electrical and male connectors (31b, 32b, 33b, 34b) within the corresponding female electrical connectors (31a, 32a, 33a, 34a) of said first and second male and female connector assembly (30A, 30B).

8. Modular multi-connection device (10) according to one or more of the preceding claims, **characterized in that** it further comprises, associated with said fixed plate (10A), a cover (50) with forced closure as a result of the actuation of said lever assembly (11) adapted to guarantee the coverage of the fixed plate (10A) and of the relative female connector assembly (30A) when said fixed plate and said conditions not connected with the movable plate 10B and with the relative male connector assembly 30B,

9. Modular multi-connection device (10) according to the preceding claim, **characterized in that** said cover (50) comprises, along the perimeter of its lower face, a gasket (52), preferably a compression gasket, which lever (11) in the coupling position is loaded by compression, making the seal against the surface of the fixed plate (10A) and of the edge of said first support element (35A) of said female connector assembly (30A).

## Patentansprüche

1. Modulare Mehrfachverbindungsvorrichtung (10) zum gleichzeitigen Verbinden einer Vielzahl von hydraulischen (20) und elektrischen (30) Leitungen, umfassend eine erste feste Platte (10A) und eine zweite bewegliche Platte (10B), die jeweils eine Vielzahl von Schnellkupplungen, Buchsen- (20A) bzw. Steckkupplungen (20B) tragen, und eine Hebelanordnung (11) zum Koppeln der Platten (10A, 10B) und zum gleichzeitigen Verbinden der Leitungen (20, 30),
ferner umfassend eine einstückig mit der ersten festen Platte (10A) verbundene erste Buchsenverbinderanordnung (30A), die einen oder mehrere elektrische Buchsenverbinder (31a, 32a, 33a, 34a) aufnimmt, wobei die erste Buchsenverbinderanordnung (30A) wiederum ein erstes Trägerelement (35A) umfasst, das dazu ausgelegt ist, die Verbindung der ersten Buchsenverbinderanordnung (30A) mit der ersten festen Platte (10A) zu ermöglichen, und
ferner umfassend eine einstückig mit der zweiten beweglichen Platte (10B) verbundene zweite Steckverbinderanordnung (30B), die einen oder mehrere entsprechende elektrische Steckverbinder (31b, 32b, 33b, 34b) aufnimmt, wobei die zweite Steckverbinderanordnung (30B) ein zweites Trägerelement (35B) umfasst, das dazu ausgelegt ist, die Verbindung der zweiten Steckverbinderanordnung (30B) mit der beweglichen Platte (10B) zu ermöglichen,
**dadurch gekennzeichnet, dass**
das erste Trägerelement (35A) einen ersten Rahmen (37A) beherbergt, der seinerseits ein oder mehrere Befestigungselemente umfasst, die geeignet sind, den Zusammenbau von Modulen (31, 32, 33, 34) zu ermöglichen, die jeweils einen elektrischen Buchsenverbinder (31a, 32a, 33a, 34a) des einen oder mehreren elektrischen Buchsenverbinder (31a, 32a, 33a, 34a) tragen, und
das zweite Trägerelement (35B) einen zweiten Rahmen (37B) beherbergt, der seinerseits ein oder mehrere Befestigungselemente umfasst, die geeignet sind, den Zusammenbau von Modulen (31, 32, 33, 34) zu ermöglichen, die jeweils einen elektrischen Steckverbinder (31b, 32b, 33b, 34b) des einen oder der mehreren elektrischen Steckverbinder (31b, 32b, 33b, 34b) tragen.

2. Modulare Mehrfachverbindungsvorrichtung (10) nach dem vorhergehenden Anspruch, **dadurch gekennzeichnet, dass** die Module (31, 32, 33, 34), die jeweils einen elektrischen Verbinder tragen, austauschbar sind, so dass der Benutzer mit den Rahmen (37A, 37B) der ersten und zweiten Verbinderanordnungen (30A, 30B) verschiedene Arten von elektrischen Verbindern assoziieren kann.

3. Modulare Mehrfachverbindungsvorrichtung (10) nach einem oder mehreren der vorhergehenden Ansprüche, **dadurch gekennzeichnet, dass** die elektrischen Verbinder, die von den Rahmen (37A, 37B) der ersten und zweiten Verbinderanordnung (30A, 30B) getragen sind, zwei elektrische Verbinder hoher Leistung (31a, 31b, 32a, 32b) mit zwei Polen, einen Verbinder mittlerer Leistung (33a, 33b) mit drei Polen und einen Verbinder niedriger Leistung (34a, 34b) mit zwölf Polen umfassen.

4. Modulare Mehrfachverbindungsvorrichtung (10) nach einem oder mehreren der vorhergehenden Ansprüche, **dadurch gekennzeichnet, dass** sie ferner zwischen dem ersten (35A) und dem zweiten (35B) Trägerelement mindestens ein Abdichtungselement (40) umfasst, das dazu ausgelegt ist, die Abdichtung gegen Luft, Wasser und Staub mit der verbundenen Vorrichtung (10) herzustellen.

5. Modulare Mehrfachverbindungsvorrichtung (10) nach dem vorhergehenden Anspruch, **dadurch gekennzeichnet, dass** das Abdichtungselement eine Lippenabdichtung umfasst und mit dem zweiten männlichen Trägerelement (35B) assoziiert ist.

6. Modulare Mehrfachverbindungsvorrichtung (10) nach einem oder mehreren der vorhergehenden Ansprüche, **dadurch gekennzeichnet, dass** sie ferner assoziiert mit der festen Platte (10A) eine Hebelanordnung (11) umfasst, die einen Hebel (11c) und ein Paar plattenartiger Elemente (12) umfasst, die jeweils einen Nockensitz (11a, 11b) umfassen, der dazu ausgelegt ist, einen entsprechenden Stift (11d, 11e) aufzunehmen, der einstückig mit der zweiten beweglichen Platte (10B) ist, um die gegenseitige Kopplung der zwei Platten und die Verbindung der Steckkupplungen (20B) innerhalb der entsprechenden Patronenbuchsenkupplungen (20A) zu ermöglichen.

7. Modulare Mehrfachverbindungsvorrichtung (10) nach dem vorhergehenden Anspruch, **dadurch gekennzeichnet, dass** die Kopplung der Platten (10A, 10B) mittels der Bewegung des Hebels (11c) die gleichzeitige Verbindung der Steckkupplungen (20B) innerhalb der entsprechenden Patronenbuchsenkupplungen (20A) und die Verbindung der elektrischen Leitungen (30) durch Kopplung der elektrischen Steckverbinder (31b, 32b, 33b, 34b) innerhalb der entsprechenden elektrischen Buchsenverbinder (31a, 32a, 33a, 34a) der ersten und zweiten Steck- und Buchsenverbinderanordnung (30A, 30B) bewirkt.

8. Modulare Mehrfachverbindungsvorrichtung (10) nach einem oder mehreren der vorhergehenden Ansprüche, **dadurch gekennzeichnet, dass** sie ferner, assoziiert mit der festen Platte (10A), einen Deckel (50) mit Zwangsverschluss als Ergebnis der Betätigung der Hebelanordnung (11) umfasst, der ausgelegt ist, um die Abdeckung der festen Platte (10A) und der relativen Buchsenverbinderanordnung (30A) zu gewährleisten, wenn die feste Platte und die Bedingungen, die nicht mit der beweglichen Platte 10B und der relativen Steckverbinderanordnung 30B verbunden sind,

9. Modulare Mehrfachverbindungsvorrichtung (10) nach dem vorhergehenden Anspruch, **dadurch gekennzeichnet, dass** der Deckel (50) entlang des Umfangs ihrer Unterseite eine Dichtung (52), vorzugsweise eine Kompressionsdichtung, umfasst, wobei der Hebel (11) in der Kopplungsposition durch Kompression belastet wird, wodurch die Abdichtung gegen die Oberfläche der festen Platte (10A) und den Rand des ersten Trägerelements (35A) der Buchsenverbinderanordnung (30A) hergestellt wird.

## Revendications

1. Dispositif modulaire à raccordement multiple (10) pour le raccordement simultané d'une pluralité de conduites hydrauliques (20) et électriques (30) comprenant une première plaque fixe (10A) et une seconde plaque mobile (10B) supportant chacune une pluralité de raccords rapides respectivement femelle (20A) et mâle (20B), et un ensemble de levier (11) pour le couplage desdites plaques (10A, 10B) et le raccordement simultané desdites conduites (20, 30),
comprenant en outre un premier ensemble de connecteur femelle (30A), relié d'un seul tenant à ladite première plaque fixe (10A), logeant un ou plusieurs connecteurs électriques femelles (31a, 32a, 33a, 34a), ledit premier ensemble de connecteur femelle (30A) comprenant à son tour un premier élément de support (35A) adapté pour permettre le raccordement dudit premier ensemble de connecteur femelle (30A) à ladite première plaque fixe (10A), et
comprenant en outre un deuxième ensemble de connecteur mâle (30B), relié d'un seul tenant à ladite seconde plaque mobile (10B), logeant un ou plusieurs connecteurs électriques mâles (31b, 32b, 33b, 34b) correspondants, ledit second ensemble de connecteur mâle (30B) comprenant un second élément de support (35B) adapté pour permettre le raccordement dudit second ensemble de connecteur mâle (30B) à ladite plaque mobile (10B),
**caractérisé en ce que**
ledit premier élément de support (35A) loge un premier cadre (37A) comprenant à son tour un ou plusieurs éléments de fixation aptes à permettre l'assemblage de modules (31, 32, 33, 34) supportant chacun un connecteur électrique femelle (31a, 32a, 33a, 34a) desdits un ou plusieurs connecteurs électriques femelles (31a, 32a, 33a, 34a), et
ledit second élément de support (35B) loge un second cadre (37B) comprenant à son tour un ou plusieurs éléments de fixation aptes à permettre l'assemblage de modules (31, 32, 33, 34) supportant chacun un connecteur électrique mâle (31b, 32b, 33b, 34b) desdits un ou plusieurs connecteurs électriques mâles (31b, 32b, 33b, 34b).

2. Dispositif modulaire à raccordement multiple (10) selon la revendication précédente, **caractérisé en ce que** lesdits modules (31, 32, 33, 34) supportant chacun un connecteur électrique sont interchangeables de sorte que l'utilisateur peut associer auxdits cadres (37A, 37B), desdits premier et second ensembles de connecteurs (30A, 30B), différents types de connecteurs électriques.

3. Dispositif modulaire à raccordement multiple (10) selon l'une ou plusieurs des revendications précédentes, **caractérisé en ce que** lesdits connecteurs électriques supportés par lesdits cadres (37A, 37B) desdits premier et second ensembles de connecteurs (30A, 30B) comprennent deux connecteurs électriques haute puissance (31a, 31b, 32a, 32b) à deux pôles, un connecteur moyenne puissance (33a, 33b) à trois pôles, et un connecteur basse puissance (34a, 34b) à douze pôles.

4. Dispositif modulaire à raccordement multiple (10) selon l'une ou plusieurs des revendications précédentes, **caractérisé en ce qu'**il comprend en outre, au moins un élément d'étanchéité (40), adapté pour réaliser l'étanchéité à l'air, à l'eau et à la poussière avec le dispositif raccordé (10), interposé entre ledit premier (35A) et ledit second (35B) élément de support.

5. Dispositif modulaire à raccordement multiple (10) selon la revendication précédente, **caractérisé en ce que** ledit élément d'étanchéité comprend un joint à lèvre et est associé audit second élément de support mâle (35B).

6. Dispositif modulaire à raccordement multiple (10) selon l'une ou plusieurs des revendications précédentes, **caractérisé en ce qu'**il comprend en outre, un ensemble de levier (11), associé à ladite plaque fixe (10A), comprenant un levier (11c) et une paire d'éléments en forme de plaque (12) comprenant chacun un siège de came (11a, 11b) adapté pour recevoir une broche correspondante (11d, 11e) solidaire de ladite seconde plaque mobile (10B) afin de permettre le couplage mutuel des deux plaques et le raccordement des raccords mâles (20B) à l'intérieur des raccords femelles correspondants (20A) d'une cartouche.

7. Dispositif modulaire à raccordement multiple (10) selon la revendication précédente, **caractérisé en ce que** le couplage des plaques (10A, 10B) au moyen du déplacement dudit levier (11c) provoque le raccordement simultané des raccords mâles (20B) à l'intérieur des raccords femelles (20A) correspondants de la cartouche et le raccordement des conduites électriques (30) par le couplage des connecteurs électriques et mâles (31b, 32b, 33b, 34b) à l'intérieur des connecteurs électriques femelles (31a, 32a, 33a, 34a) correspondants desdits premier et second ensembles de connecteurs mâle et femelle (30A, 30B).

8. Dispositif modulaire à raccordement multiple (10) selon l'une ou plusieurs des revendications précédentes, **caractérisé en ce qu'**il comprend en outre, un couvercle (50) à fermeture forcée suite à l'actionnement dudit ensemble de levier (11), associé à ladite plaque fixe (10A), adapté pour garantir la couverture de la plaque fixe (10A) et de l'ensemble connecteur femelle (30A) relatif lorsque ladite plaque fixe et lesdites conditions ne sont pas raccordées à la plaque mobile (10B) et à l'ensemble de connecteur mâle (30B) relatif,

9. Dispositif modulaire à raccordement multiple (10) selon la revendication précédente, **caractérisé en ce que** ledit couvercle (50) comprend, le long du périmètre de sa face inférieure, un joint (52), de préférence un joint de compression, dont le levier (11) en position de couplage est chargé par compression, réalisant l'étanchéité contre la surface de la plaque fixe (10A) et du bord dudit premier élément de support (35A) dudit ensemble de connecteur femelle (30A).
